# EUROPÄISCHE PATENTANMELDUNG

(11) **EP 0 642 235 A2**
(43) Veröffentlichungstag der Anmeldung: **08.03.1995**
(21) Anmeldenummer: 94113407.4
(22) Anmeldetag: 26.08.1994
(51) Int. Cl.: H04B 10/06, G01R 21/133

(54) **Verfahren zum Erfassen und Auswerten eines optischen Signals und Datenerfassungsgerät**

(30) Priorität: 01.09.1993 DE 4329500
(71) Anmelder: SIEMENS AKTIENGESELLSCHAFT, D-80333 München (DE)
(72) Erfinder: Windsheimer, Klaus, Dipl.-Ing., D-91443 Scheinfeld (DE)

(57) **Zusammenfassung**

Datensammeleinrichtungen weisen oftmals optische Geber zur Übermittlung der gespeicherten Daten auf. Meist können Leseeinrichtungen bei der Erfassung dieser Daten nicht unmittelbar an den Geber angekoppelt werden, so daß Fremdlicht die Datenübermittlung beeinträchtigt. Das Auswerteverfahren und die Schaltungsanordnung zur Durchführung des Verfahrens soll eine von Störeinflüssen weitgehend unabhängige Signalerfassung ermöglichen.

Hierzu wird das von einem Störsignal überlagerte Nutzsignal zunächst verstärkt, dann durch Differenzieren ein die Impulsflanken des Nutzsignales enthaltendes Ableitungssignal gebildet und anschließend diese Impulsflanken in einer Komparatorstufe (9) je nach Polarität getrennt und schließlich mittels eines nachgeschalteten Speichergliedes (15) ein dem Nutzsignal entsprechendes Ausgangssignal erzeugt.

Die Schaltungsanordnung zur Durchführung des Verfahrens eignet sich insbesondere zur schnellen Erfassung von Zählerständen mit einem mobilen Datenerfassungsgerät.

## Beschreibung

Die Erfindung betrifft ein Verfahren zum Erfassen und Auswerten eines optischen Signals, das von einem Zähler und/oder Tarifgerät abgegeben wird. Die Erfindung betrifft ferner ein Datenerfassungsgerät zum Ablesen eines Zählers und /oder eines Tarifgerätes.

Zähler und/oder andere Datensammeleinrichtungen weisen oftmals aktive und/oder passive optische Geber zur Übermittlung der gespeicherten Daten auf. Zum Auslesen der Daten wird ein Lesekopf eines mobilen Datenerfassungsgerätes, beispielsweise ein Infrarot-Abtastkopf, derart auf die Datensammeleinrichtung aufgebracht, daß ein Datentransfer zwischen dem optischen Geber und dem Abtastkopf stattfinden kann. Die Beschreibung eines derartigen mobilen Datenerfassungsgerätes ist dem Siemens Prospekt "Mobiles Datenerfassungsgerät MDE 7FX20", Bestell-Nr. E50001-0311-A4 zu entnehmen.

Der Datentransfer zwischen optischen Geber und dem Abtastkopf des mobilen Datenerfassungsgerätes ist dadurch erschwert, daß der Abtastkopf meist nicht unmittelbar mit dem optischen Geber gekoppelt werden kann, da der Zähler und/oder die Datensammeleinrichtung im fraglichen Bereich von einem zwar durchsichtigen aber fest installierten Gehäuse umgeben ist. Hierdurch ist infolge der vergrößerten Entfernung zwischen optischem Geber und Abtastkopf das Signal des optischen Gebers bis zum Erreichen des Abtastkopfes bereits geschwächt. Außerdem kann die Empfängerschaltung des mobilen Datenerfassungsgerätes durch einfallendes Fremdlicht übersteuert werden.

Der Erfindung liegt die Aufgabe zugrunde, ein Verfahren für eine Signalerfassung und -auswertung anzugeben, das weitgehend unabhängig von optischen Störeinflüssen zuverlässig arbeitet, ohne dabei die einfache Handhabung einzuschränken. Ferner soll ein Datenerfassungsgerät zur Durchführung des Verfahrens geschaffen werden.

Die der Erfindung zugrundeliegende Aufgabe wird gelöst durch ein Verfahren zum Erfassen und Auswerten eines optischen Signals, das von einem Zähler und/oder einem Tarifgerät abgegeben wird und ein rechteckförmiges Nutzsignal enthält, umfassend folgende Schritte:
das optische Signal und ein durch optische Einflüsse bei der Übertragung des optischen Signals hervorgerufenes Störsignal werden in einem vorgegebenen Abstand vom Zähler oder Tarifgerät mit einem Datenerfassungsgerät erfaßt,
das Nutz- und das Störsignal werden in ein elektrisches Signal umgewandelt,
das elektrische Signal wird verstärkt und danach durch Differenzieren in ein Impulsflanken aufweisendes Ableitungssignal umgewandelt,
die Impulsflanken werden nach Polarität getrennt und
in Abhängigkeit von der zeitlichen Folge der Impulsflanken unterschiedlicher Polarität wird ein dem Nutzsignal entsprechendes Ausgangssignal erzeugt.

Das Verfahren erlaubt eine sichere, ungestörte Datenerfassung, so daß Datenfehler vermieden sind. Da es sich hierbei gegebenenfalls um die Verrechnung von erfaßten Zähldaten geht, ist eine präzise Datenhaltung von großem Interesse.

Die ferner genannte Aufgabe wird gelöst durch ein Datenerfassungsgerät zum Ablesen eines Zählers und/oder eines Tarifgerätes mit optischem Datenausgang, umfassend:
einen optischen Wandler (3) zum Erfassen eines optischen Signals des Zählers und/oder des Tarifgeräts in einem vorgegebenen Abstand,
einen nachgeschalteten Verstärker (4), dessen Ausgang an einen Differenzierer (5) angeschlossen ist und
einer dem Differenzierer (5) nachgeschalteten Komperatorstufe (9), welcher eine mit mindestens einem Signalausgang (23) verbundene Speicherschaltung (15) nachgeschaltet ist.

Bei einer Weiterbildung des Datenerfassungsgeräts umfaßt die Komparatorstufe einen ersten und einen zweiten Komparator. Für die beiden Komparatoren können unterschiedliche Referenzspannungen gewählt werden. Hierdurch kann beispielsweise eine überlagerte Offset-Spannung kompensiert werden.

Mit einem als Speicherschaltung vorgesehenen RS-Flipflop, wird die benötigte Speicherwirkung in einfacher Weise durch eine robuste und kostengünstige bistabile Kippstufe verwirklicht.

Gemäß einer Weiterbildung besteht das RS-Flipflop aus zwei entsprechend verschalteten NOR-Gattern. Ein derart aufgebautes Flipflop hat, nachdem gleichzeitig am Setzeingang und am Rücksetzeingang des Flipflops das Signal "HIGH" angelegt wurde, kein definiertes Ausgangssignal. Man spricht von einer "verbotenen Kombination", da das Flipflop nicht gleichzeitig gesetzt und rückgesetzt werden kann. Somit ist die Auswahl gerade dieses Flipflops von Vorteil, da diese Kombination der Eingangssignale bei der vorliegenden Schaltungsanordnung nicht auftritt.

Dadurch, daß eine Rücksetzschaltung mit einem Rücksetzeingang der Speicherschaltung verbunden ist, kann die Speicherschaltung bei Bedarf in einen definierten Zustand versetzt werden. Dies ist beispielsweise bei der Inbetriebnahme der Schaltungsanordnung sowie bei etwaigen Fehlerdiagnosen von Vorteil.

Gemäß den übrigen Ansprüchen sind vorteilhafte Weiterbildungen der Rücksetzschaltung gegeben. Es kann je nach Bedarf eine geeignete Rücksetzschaltung ausgewählt werden.

Das Datenerfassungsgerät wird vorteilhaft zum mobilen Ablesen von Zählern und/oder Tarifgeräten mit optischer Anzeige oder Datenausgabe verwendet. Bei dieser Verwendung sind infolge der einfachen Handhabbarkeit besondere Vorteile der Schaltungsanordnung gegeben. Störeinflüsse sind weitgehend unterdrückt, so daß eine sichere zuverlässige Datenerfassung möglich ist.

Die Erfindung, weitere Vorteile und Einzelheiten werden anhand eines Ausführungsbeispieles in der Zeichnung näher erläutert. Es zeigen:
- FIG 1: einen Schaltplan einer Schaltungsanordnung zur Durchführung des Auswerteverfahrens,
- FIG 2: das Nutzsignal eines optischen Wandlers,
- FIG 3: ein Störsignal,
- FIG 4: die Überlagerung des Nutz- und Störsignals,
- FIG 5: das Ableitungssignal eines Differenzierers,
- FIG 6: das Ausgangssignal eines ersten Komparators,
- FIG 7: das Ausgangssignal eines zweiten Komparators und
- FIG 8: das Ausgangssignal der Schaltungsanordnung

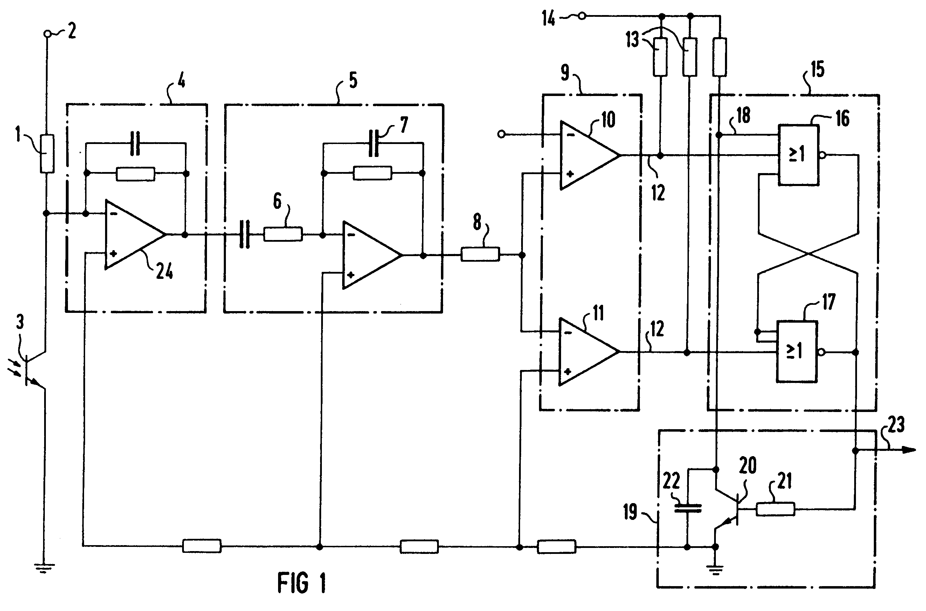

FIG 1 zeigt einen Schaltplan einer Schaltungsanordnung, wie sie beispielsweise als Empfängerschaltung bei einem Infrarot-Abtastkopf verwendet werden kann. Die dargestellte Schaltungsanordnung kann auch in Form eines Algorithmus in einer, dem Abtastkopf zugeordneten, Recheneinheit abgelegt sein. Die Schaltungsanordnung findet Anwendung bei einem Datenerfassungsgerät zum Ablesen von Zählern oder Tarifgeräten. Der Einsatz erfolgt bevorzugt mobil. Das Ablesen erfolgt berührungslos über eine Lichtstrecke, gegebenenfalls auch durch ein Sichtfenster eines Gehäuses, in dem das abzulesende Gerät installiert ist.

Ein über einen Vorwiderstand 1 an einen Versorgungsanschluß 2 angeschlossener Fototransistor 3 eines Optokoppler ist mit seinem Kollektoranschluß gemeinsam mit dem Vorwiderstand 1 mit dem invertierenden Eingang eines Verstärkers 4 verbunden. Der Ausgang dieses Verstärkers 4 ist an einen Differenzierer 5 angeschlossen. Der Differenzierer 5 ist zur Vermeidung etwaiger Schwingungsprobleme mit einem Stabilisierungswiderstand 6 in der Eingangsleitung und einem Stabilisierungskondensator 7 in der Rückkopplung beschaltet. Der Ausgang dieses Differenzierers 5 steht über einen Ausgangswiderstand 8 mit einer Komparatorstufe 9 in leitender Verbindung. Die Komparatorstufe 9 weist einen ersten Komparator 10 und einen zweiten Komparator 11 auf. Die Komparatoren 10,11 haben jeweils einen Kollektorausgang 12. Das der Komparatorstufe 9 zugeleitete Eingangssignal wird dem nichtinvertierenden Eingang des ersten Komparators 10 und dem invertierenden Eingang des zweiten Komparators 11 zugeführt. An die jeweils anderen Eingänge der beiden Komparatoren 10,11 ist eine Referenzspannung angelegt. Die Kollektorausgänge 12 der beiden Komparatoren 10,11 sind über Pull-up-Widerständen 13 an einen weiteren Versorgungsanschluß 14 angeschlossenen.

Der Komparatorstufe 9 ist eine Speicherschaltung 15 nachgeschaltet. Die Speicherschaltung 15 umfaßt im wesentlichen ein aus einem ersten und einem zweiten NOR-Gatter 16,17 bestehendes RS-Flipflop. Hierbei ist der Kollektorausgang 12 des ersten Komparators 10 mit einem Setzeingang des ersten NOR-Gatters 16 und der Kollektorausgang 12 des zweiten Komparators 11 mit einem Setzeingang des zweiten NOR-Gatters 17 verbunden. An einen den Rücksetzeingang der Speicherschaltung 15 bildenden, Rücksetzeingang 18 des ersten NOR-Gatters 16 ist zusätzlich eine Rücksetzschaltung 19 angeschlossen. Diese Rücksetzschaltung 19 weist einen Schalttransistor 20 auf, an dessen Basis ein Eingangswiderstand 21 angeschlossen ist und zu dessen Kollektor-Ermitter-Strecke ein Kondensator 22 parallel liegt. Der Ausgang des RS-Flipflops bildet den Signalausgang 23 der Schaltungsanordnung.
Im folgenden wird die Wirkungsweise der Schaltungsanordnung unter Zuhilfenahme der in den weiteren Figuren enthaltenen Diagramme im einzelnen erläutert.

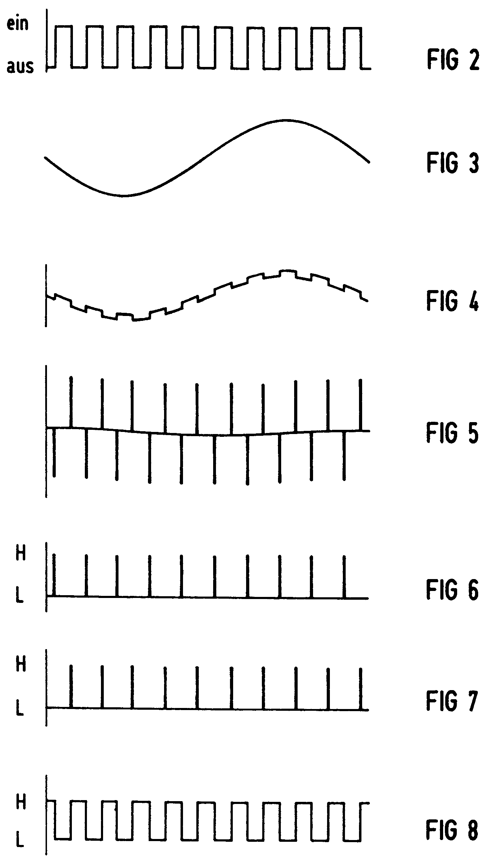

Der Fototransistor 3 des Optokopplers empfängt von einem entsprechenden Geber eine in Form eines rechteckförmigen Infrarot-Impulsmusters vorliegende Information. Dieses Nutzsignal wird von dem Fototransistor 3 in ein entsprechendes elektrisches Signal, wie es in FIG 2 dargestellt ist, umgewandelt. Zusätzlich empfängt der Fototransistor 3 ein, beispielsweise durch Fremdlicht hervorgerufenes, Störsignal, das ebenfalls in ein, der Darstellung in FIG 3 entsprechendes, elektrisches Signal umgewandelt wird. Die Überlagerung beider Signale wird auf den invertierenden Eingang eines im Verstärker 4 vorgesehenen Operationsverstärkers 24 gegeben, der, um eine Übersteuerung zu vermeiden, eine geringe Verstärkung aufweist. Am Ausgang des Verstärkers 4 steht dann ein verstärktes, der Überlagerung beider Signale entsprechendes Signal an. Das Ausgangssignal des Verstärkers 4 ist in FIG 4 dargestellt.

Dieses Signal wird nun dem Eingang des Differenzierers 5 zugeführt. Der Differenzierer 5 erzeugt ein in FIG 5 dargestelltes Ableitungssignal. Dieses Ableitungssignal stellt die Differenzierung des Eingangssignales nach der Zeit dar. Die Spannungsimpulse unterschiedlicher Polarität des Ableitungssignals entsprechen der zeitlichen Folge der steigenden und fallenden Impulsflanken des Nutzsignals.

Das Ableitungssignal wird der Komparatorstufe 9 übermittelt. Hier wird das Ableitungssignal derart aufgespalten, daß die Spannungsimpulse des Ableitungssignals nach ihrer Polarität getrennt werden. Die anschließend an den Kollektorausgängen 12 der Komparatoren 10 bzw. 11 anstehenden Schaltimpulse entsprechen der Folge der Impulsflanken des Nutzsignales, wobei die in FIG 6 dargestellten Schaltimpulse des ersten Komparators 10 den Zeitpunkt einer positiven Impulsflanke und die in FIG 7 dargestellten Schaltimpulse des zweiten Komparators 11 den Zeitpunkt einer negativen Impulsflanke des Nutzsignales markieren.

Durch einen Schaltimpuls des ersten Komparators 10 wird das RS-Flipflop gesetzt. Der mit dem Ausgang des RS-Flipflop identische Signalausgang 23 der Schaltungsanordnung liegt damit auf "LOW". Dieser Signalzustand bleibt erhalten bis ein Schaltimpuls des zweiten Komparators 11 als Rücksetzsignal auf das RS-Flipflop gegeben wird. Der Signalausgang 23 wechselt dadurch in den Signalzustand "HIGH". Dieser Signalzustand "HIGH" der Schaltungsanordnung bleibt solange erhalten bis durch einen Schaltimpuls des ersten Komparators 10 der Signalausgang 23 erneut auf "LOW" gesetzt wird. Somit ergibt sich am Signalausgang 23 ein dem Nutzsignal entsprechendes rechteckförmiges Ausgangssignal. Das durch Fremdlicht hervorgerufene Störsignal ist somit vollständig unterdrückt.

Durch das Auswerteverfahren in Verbindung mit der vorgestellten Schaltungsanordnung wird der Grad der Fehlerhaftigkeit der schnell und leicht durchführbaren optischen Ablesung von Datensammeleinrichtungen stark reduziert. Die erzielbare Genauigkeit der Ablesung wird somit erhöht, ohne daß die einfache Handhabung der Signalerfassung beeinträchtigt würde.

## Patentansprüche

1. Verfahren zum Erfassen und Auswerten eines optischen Signals, das von einem Zähler und/oder einem Tarifgerät abgegeben wird und ein rechteckförmiges Nutzsignal enthält, umfassend folgende Schritte:
das optische Signal und ein durch optische Einflüsse bei der Übertragung des optischen Signals hervorgerufenes Störsignal werden in einem vorgegebenen Abstand vom Zähler oder Tarifgerät mit einem Datenerfassungsgerät erfaßt,
das Nutz- und das Störsignal werden in ein elektrisches Signal umgewandelt,
das elektrische Signal wird verstärkt und durch Differenzieren in ein Impulsflanken aufweisendes Ableitungssignal umgewandelt,
die Impulsflanken werden nach Polarität getrennt und
in Abhängigkeit von der zeitlichen Folge der Impulsflanken unterschiedlicher Polarität wird ein dem Nutzsignal entsprechendes Ausgangssignal erzeugt.

2. Datenerfassungsgerät zum Ablesen eines Zählers und/oder eines Tarifgerätes mit optischem Datenausgang, umfassend:
einen optischen Wandler (3) zum Erfassen eines optischen Signals des Zählers und/oder des Tarifgeräts in einem vorgegebenen Abstand,
einen nachgeschalteten Vestärker (4), dessen Ausgang an einen Differenzierer (5) angeschlossen ist und
einer dem Differenzierer (5) nachgeschalteten Komperatorstufe (9), welcher eine mit mindestens einem Signalausgang (23) verbundene Speicherschaltung (15) nachgeschaltet ist.

3. Datenerfassungsgerät nach Anspruch 2, bei der die Komparatorstufe (9) einen ersten Komparator (10) und einen zweiten Komparator (11) umfaßt, wobei das Ableitungssignal des Differenzierers (5) an dem nichtinvertierenden Eingang des einen Komparators (erster Komparator 10) und an dem invertierenden Eingang des anderen Komparators (zweiter Komparator 11) anliegt und am jeweils anderen Eingang der Komparatoren (10,11) eine entsprechende Referenzspannung ansteht.

4. Datenerfassungsgerät nach Anspruch 2 und/oder 3, bei der als Speicherschaltung (15) ein RS-Flipflop vorgesehen ist, das durch einen Impuls des einen Komparators (erster Komparator 10) setzbar und durch einen Impuls des anderen Komparators (zweiter Komparator 11) rücksetzbar ist.

5. Datenerfassungsgerät nach Anspruch 4, bei der das RS-Flipflop aus zwei entsprechend verschalteten NOR-Gattern (16,17) besteht.

6. Datenerfassungsgerät nach Anspruch 4 und/oder 5, bei der eine Rücksetzschaltung (19) mit einem Rücksetzeingang (18) der Speicherschaltung (15) verbunden ist.

7. Datenerfassungsgerät nach Anspruch 6, bei der die Rücksetzschaltung (19) eine nach einer vorgebbaren Zeit ein Rücksetzsignal erzeugende Digitalschaltung aufweist.

8. Datenerfassungsgerät nach Anspruch 6, bei der die Rücksetzschaltung (19) einen programmierbaren Mikrocomputer umfaßt.

9. Datenerfassungsgerät nach Anspruch 6, bei der die Rücksetzschaltung (18) einen Transistor (20) mit einer entsprechenden RC-Beschaltung (21,22) umfaßt.
